# EUROPÄISCHE PATENTSCHRIFT

(11) **EP 1 449 324 B1**
(45) Veröffentlichungstag und Bekanntmachung des Hinweises auf die Patenterteilung: **26.10.2005**
(21) Anmeldenummer: 01995536.8
(22) Anmeldetag: 29.11.2001
(51) Int. Cl.: H04L 9/32, H04L 29/06, H04Q 7/38

(54) **NUTZUNG EINES PUBLIC-KEY-SCHLÜSSELPAARES IM ENDGERÄT ZUR AUTHENTISIERUNG UND AUTORISIERUNG DES TELEKOMMUNIKATIONS-TEILNEHMERS GEGENÜBER DEM NETZBETREIBER UND GESCHÄFTSPARTNERN**
USE OF A PUBLIC KEY KEY PAIR IN THE TERMINAL FOR AUTHENTICATION AND AUTHORISATION OF THE TELECOMMUNICATION USER WITH THE NETWORK OPERATOR AND BUSINESS PARTNERS
UTILISATION D'UNE PAIRE DE CLES PUBLIQUES DANS UN TERMINAL POUR L'AUTHENTIFICATION ET L'AUTORISATION DE L'ABONNE DE TELECOMMUNICATION PAR RAPPORT AU FOURNISSEUR DE RESEAU ET DES PARTENAIRES COMMERCIAUX

(43) Veröffentlichungstag der Anmeldung: 25.08.2004
(73) Patentinhaber: SIEMENS AKTIENGESELLSCHAFT, 80333 München (DE)
(72) Erfinder: CUELLAR, Jorge, 82065 Baierbrunn (DE); MARHOEFER, Michael, 82041 Deisenhofen (DE)
(86) Internationale Anmeldenummer: PCT/DE2001/004461
(87) Internationale Veröffentlichungsnummer: WO 2003/049365

(56) Entgegenhaltungen:
- EP-A- 0 903 887
- WO-A-01/02940
- PUTZ S ET AL: "Authentication schemes for third generation mobile radio systems" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, 8. September 1998 (1998-09-08), Seiten 126-130, XP010314761 ISBN: 0-7803-4872-9
- PARK CH-S: "ON CERTIFICATE-BASED SECURITY PROTOCOLS FOR WIRELESS MOBILE COMMUNICATION SYSTEMS" IEEE NETWORK, IEEE INC. NEW YORK, US, Bd. 11, Nr. 5, 1. September 1997 (1997-09-01), Seiten 50-55, XP000699941 ISSN: 0890-8044

## Beschreibung

Die Erfindung betrifft Vorrichtungen und Verfahren zum Prüfen der Berechtigung (Authentisierung und/oder Autorisierung) eines Teilnehmers gegenüber einer Zugangseinrichtung eines Telekommunikationsnetzes oder gegenüber einem über dieses Netz erreichbaren weiteren Diensteanbieter.

EP-A2-0903887 beschreibt ein von einer Authentisierungseinheit eines Mobilfunknetzes erzeugtes Geheimnis das an eine Mobilstation übertragen wird, die das Geheimnis zur Authentisierung der Mobilstation gegenüber einer Basisstation des Mobilfunknetzes verwendet, wobei die Basisstation eine Authentisierungsprüfung mit Hilfe der Authentisierungseinheit durchführen kann. Insbesondere wird vorgeschlagen, dass ein Serviceprovider, der ein RSA- Schlüsselpaar (F,G) besitzt, einer Mobilstation, die ein eigenes Schlüsselpaar (D,E) besitzt, ein Ergebnis F(E) einer Verschlüsselung des öffentlichen Schlüssels E der Mobilstation mit dem privaten Schlüssel F des serviceproviders sendet, worauf sich die Mobilstation dem Mobilfunknetz E und F(E) senden kann, worauf der Serviceprovider mittels seines privaten Schlüssels G aus F(E) wieder E zurückgewinnen kann; hierauf sendet der Serviceprovider eine mit dem öffentlichen Schüssel E des Mobilfunkendgerätes verschlüsselte Zufallszahl E(X) an das Mobilfunkendgerät, welches mittels seines privaten Schlüssels D die Zufallszahl X aus E(X) zurückgewinnen und unverschlüsselt an den Serviceprovider zur Authentisierung zurücksenden kann.

XP10314761, ISBN 0-7803-4872-9 von Stefan Pütz beschreibt ein Authentisierungsverfahren für Mobilfunknetze der dritten Generation, bei dem die Authentisierung durch ein challengeresponse-Verfahren erfolgt.

Gemäß z.B. dem GSM-Standard verwendet eine GSM-Mobilstation (Handy) eine SIM-Karte eines Teilnehmers, die ein die SIM-Karte identifizierendes Geheimnis enthält, dass auch dem Netzbetreiber bekannt ist (Shared Secret) sowie eine vom die Mobilfunkstation benutzenden Teilnehmer abgefragte PIN-Nummer. Durch ein geeignetes Protokoll (z.B. das Challenge-Response-Protokoll zur GSM-Authentisierung) kann ein Netzbetreiber eine SIM-Karte eines Benutzers identifizieren und dem Teilnehmer beispielsweise die Benutzung des Mobilfunknetzes gestatten oder verweigern. Dieses verfahren eignet sich jedoch nur zur Authentisierung in n:1-Beziehungen (Authentisierung von zum Beispiel n potentiellen Teilnehmern eines Mobilfunknetzes gegenüber einem Netzbetreiber), ist jedoch ungeeignet, um den Benutzer auch gegenüber mehreren potentiellen (im Voraus nicht abschließend bekannten) Geschäftspartnern (n: m-Beziehung) zu authentisieren.

Aufgabe der vorliegenden Erfindung ist es deshalb, eine einfache und effiziente Authentisierung und Autorisierung eines Telekommunikationsteilnehmers für bestimmte Dienste oder Transaktionen über ein Telekommunikationsnetz gegenüber einer zugangseinrichtung eines Telekommunikationsnetzes, welches der Telekommunikationsteilnehmer über ein Telekommunikationsendgerät mit einem Telekommunikationsteilnehmeridentitätsmo dul benutzen möchte, zu ermöglichen. Die Aufgabe wird jeweils durch die Gegenstände der unabhängigen Ansprüche gelöst.

Die Erfindung erlaubt eine einfache und effiziente Authentisierung eines Telekommunikationsteilnehmers gegenüber dem Telekommunikationsnetz, über welches er (zur Abwicklung der Dienste wie Transaktionen etc.) kommuniziert und auch eine einfache und effiziente Authentiserung und/oder Autorisierung gegenüber Dritten für vorgegebene Dienste wie Transaktionen (vertrauliche E-Mail, Bankgeschäfte, Bezahlungen etc.).

Das erfindungsgemäße Verfahren funktioniert auch bei n: m-Beziehungen wie der Authentisierung von potentiellen Telekommunikationsteilnehmern durch Telekommunikationsteilnehmeridentitätsmodule in Telekommunikationsendgeräten gegenüber mehreren (m) Connectivity-Providern für peer-to-peer-Transaktionen zwischen Endanwendern, in Adhoc-Networken etc. erlaubt die Generierung eines Zusatznutzens (für rechtliche Verbindlichkeit von Bestellungen, Überweisungen, etc.) bei der Verwendung von Public-key Schlüsselpaaren, erlaubt die Mehrfachnutzung vorhandener Komponenten (Telekommunikationsteilnehmeridentitätsmodule) ohne Erhöhung Endgeräte-seitiger Hardware-Kosten und schafft einen sehr hohen Grad an Sicherheit.

Das Verfahren ist insbesondere dazu geeignet, mobile Endgeräte gegenüber einem Internetprotokoll-Netz für die Nutzung dieses Netzes selbst sowie für Dienste, welche Dritte über das Internetprotokoll-Netz anbieten zu authentisieren.

Weitere Merkmale und Vorteile der Erfindung ergeben sich aus den Unteransprüchen und der nachfolgenden Beschreibung eines Ausführungsbeispieles anhand der Zeichnung. Dabei zeigt:

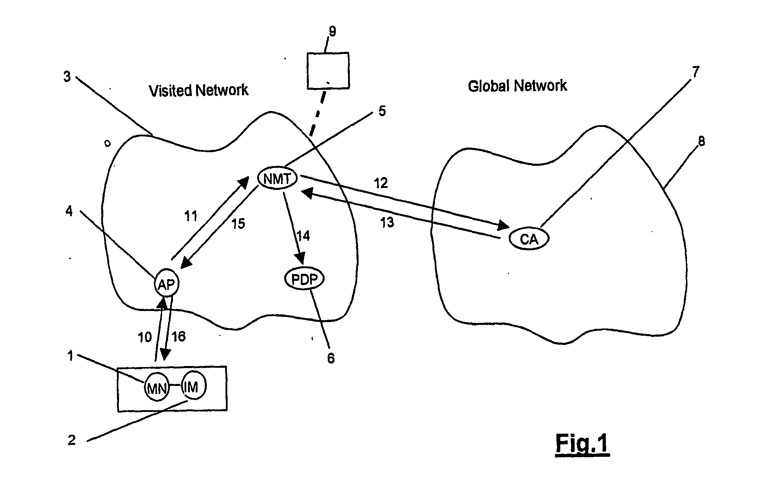

- Fig. 1: schematisch eine erfindungsgemäße Berechtigungsprüfung

Figur 1 zeigt ein Telekommunikationsendgerät 1 (mobile node MN, z.B. zellulares Mobilfunkendgerät für GSM, UMTS etc.) mit einem damit verbundenen (beispielsweise darin einfügbaren) Telekommunikationsteilnehmeridentitätsmodul 2 (z.B. SIM, W-SIM, UICC eines U-SIM etc.), ein besuchtes Telekommunikationsnetz 3 (beispielsweise ein Internetprotokoll-Netz eines Mobiltelekommunikationsnetzes etc.) mit einer Zugangseinrichtung 4 (AP = Access Point) zum Telekommunikationsnetz 3, mit einer Netzwerkmanagementeinrichtung 5 (NMT = Network Management Tool) und einer Zugangsverwaltungsinstanz 6 (PDP = Policy Decision Point). Vom Telekommunikationsnetz 3, welches der Benutzer des Telekommunikationsendgerätes 1 nutzen möchte, kann eine Zertifizierungseinrichtung 7, die auch ein öffentlich zugängliches Verzeichnis der von ihr generierten Zertifikate sowie der diesen Zertifikaten zugeordneten Statusangaben anbietet (im gleichen Telekommunikationsnetz 3 oder in einem anderen Telekommunikationsnetz 8 oder bei einem anderen Betreiber oder in einem Trust-Center, auf welches von Elementen des Telekommunikationsnetzes 3 zugegriffen werden kann), kontaktiert werden zur Überprüfung von im Telekommunikationsendgerät 1 gespeicherten Identitätsangaben (MSISDN etc), Zertifikaten und zur Abfrage der zugehörigen Statusdaten des Telekommunikationsteilnehmers 1 betreffend die Durchführung von Diensten. Diese Dienste umfassen z.B. Transportdienste, insbesondere die Nutzung des Telekommunikationsnetzes 3 selbst, und/oder Anwendungsdienste wie beispielsweise ortsbezogene Dienste und/ oder Transaktionen wie beispielsweise Bestellungen, Überweisungen etc. mit Anbieter 9 über das Telekommunikationsnetz 3.

Der Benutzer des Telekommunikationsendgerätes 1 möchte gegenüber dem Betreiber des Netzwerkes 3 und / oder einem Anbieter 9 (innerhalb des Telekommunikationsnetzes 3 oder außerhalb des Telekommunikationsnetzes 3, beispielsweise auch ein vom Telekommunikationsnetz unabhängiger dritter Anbieter, welcher seine Dienste nur über das Telekommunikationsnetz 3 anbietet), seine Berechtigung zur Inanspruchnahme von Diensten des Anbieters von 3 oder 9 nachweisen, also eine Authentisierung und/oder Autorisierung durchführen. Die Authentisierung und/oder Autorisierung erfolgt gegenüber dem Telekommunikationsnetz 3 oder dem Anbieter des Dienstes 9 (z.B. von dem NMT (5)), sobald die Identitätsangabe (MSISDN etc) und die Berechtigung des Telekommunikationsteilnehmers 1 (bzw. des Telekommunikationsteilnehmeridentitätsmoduls 2) überprüft wurde.
Die Überprüfung der Identitätsangabe und Berechtigung des Telekommunikationsteilnehmers 1 erfolgt hier durch Überprüfung eines oder mehrerer in dessen Telekommunikationsteilnehmeridentitätsmodul 2 gespeicherten Zertifikate(s) sowie unter Anwendung eines ebenfalls im Teilnehmeridentitätsmodul 2 gespeicherten privaten Schlüssels eines asymmetrischen (PKIbasierten) Schlüsselpaares. Die Überprüfung wird beispielsweise bei dem Versuch einer Einbuchung des Telekommunikationsteilnehmerendgerätes 1 in das Telekommunikationsnetz 3 im Rahmen eines Autorisierungsüberprüfungsverfahrens zwischen der NMT, Zugangseinrichtung AP 4 und dem Telekommunikationsteilnehmerendgerät 1 durch Überprüfung des Zertifikates / der Zertifikate und Abfrage der zugeordneten Statusdaten in der Zertifizierungseinrichtung 7 durchgeführt. Der NMT verifiziert die Gültigkeit des Zertifikates durch eine OCSP- oder CRL- Abfrage bei CA 7.

Das Telekommunikationsteilnehmeridentitätsmodul 1 übersendet, wenn es sich gegenüber der Zugangseinrichtung 4 autorisieren möchte, nach Eingabe einer PIN oder einer sonstigen für den Telekommunikationsteilnehmer spezifischen Eingabe (Fingerabdruck etc), der Zugangseinrichtung 4 (beispielsweise auf ein Angebot (Challenge) der Zugangseinrichtung 4 unter Übermittlung einer Challenge-Nummer hin) eine Identitätsangabe (betreffend die Identität des Telekommunikationsteilnehmeridentitätsmoduls oder des Endgerätes und/oder des Benutzers), ein oder mehrere (aus einer Identitäts- und/oder zugeordneten Berechtigungsangabe, einem öffentlichen Schlüssel eines asymmetrischen Schlüsselpaares mit einem durch nur der Zertifizierungseinrichtung 7 bekannten Zertifikatgenerierungsverfahren generierbares) Zertifikat, sowie einen durch den privaten Schlüssel aus dem Telekommunikationsteilnehmeridentitätsmodul signierten Schutz gegen eine missbräuchliche Wiederholung einer abgefangenen Anfrage durch einen Dritten (replayprotection, nonce). Die Zugangsstelle (AP, 4) übermittelt nach Überprüfung der korrekten Zusendung (z.B. challenge hinreichend frisch, nonce korrekt und mittels des im Teilnehmeridentitätsmodul gespeicherten privaten Schlüssels signiert), das/die Zertifikat(e) an eine für einen Teil des Netzwerkes 3 oder das ganze Netzwerk 3 zuständige Netzwerkmanagementeinrichtung 5 (NMT = Network Management Tool) im Schritt 11.

Die Netzwerkmanagementeinrichtung 5 übersendet das/die Zertifikat(e) im Schritt 12 an eine Zertifizierungseinrichtung 7 (CA = Certification Authority), welche z.B. mittels eines OCSP-Responders und unter Verwendung einer Liste widerrufener Zertifikate (certificate revocation list, CRL) die Gültigkeit des/der Zertifikate(s) und die Korrektheit der angegebenen Identitätsangaben und ggf. Berechtigungen) überprüft und Auskunft gibt über den Status (z.B. gültig/ungültig etc) des/der Zertifikate sowie ggf. die Berechtigungen des Telekommunikationsteilnehmers. Das Zertifikat bestätigt die Identitätsangabe, wenn die Zertifizierungseinrichtung mittels eines ihr bekannten Verfahrens aus dem Zertifikat die Identitätsangabe generieren kann.
Falls aus dem/den Zertifikat(en) von der Zertifizierungseinrichtung 7 der öffentliche Schlüssel und die Identität/Berechtigungen des Telekommunikationsteilnehmers 1,2 und/oder des Mobilfunkendgerätes gewonnen werden kann, und die Statusauskunft (Zertifikat nicht abgelaufen, nicht widerrufen, Berechtigungen etc) ermittelt werden kann, wird der Status des Zertifikates von der Zertifizierungseinrichtung 7 der Netzwerkmanagementeinrichtung 5 im Netzwerk 3 mitgeteilt (13). Die Netzwerkmanagementeinrichtung 5 entscheidet anhand der mitgeteilten Statusangaben und Berechtigungen über den Umfang der Berechtigungen des MN 1, Dienste und Ressourcen des Telekommunikationsnetzes 3 in Anspruch zu nehmen und teilt dies im Schritt 14 der Zugangsverwaltungsinstanz PDP 6 mit. Entsprechend dieser Entscheidung gibt dann PDP 6 durch Übertragung einer entsprechenden Policy an den AP 4 für den Telekommunikationsteilnehmer 1 die Nutzung des Telekommunikationsnetzes 3 frei oder sie bleibt bei vollständig negativer Entscheidung des NMT 5 weiterhin gesperrt.

Die Netzwerkmanagementeinrichtung 5 kann zentral für das Netzwerk 3 auf Anfrage Dritter 9 mitteilen, ob und für welche Dienste etc. ein Mobilfunkendgerät (1) aktuell von der Zertifizierungseinrichtung 7 als berechtigt betrachtet wird. Ferner wird bei positivem Zertifikatsstatus (Zertifikat gültig etc) ein vom NMT (5) erzeugtes Geheimnis (z.B. session key) mit einem im Netzwerk 3 verwendeten Verschlüsselungsverfahren an die Zugangseinrichtung 4 gesendet und dort entschlüsselt. Ferner wird das gleiche Geheimnis von der Netzwerkmanagementeinrichtung 5 mit dem öffentlichen Schlüssel des Telekommunikationsidentitätsmoduls 2 (welchen öffentlichen Schlüssel die Netzwerkmanagementeinrichtung beim Beginn der Einbuchung vom Endgerät 1 über die Zugangseinrichtung 4 im Schritt 10 erhalten kann) verschlüsselt. Weiterhin kann das NMT 5 sein eigenes Zertifikat über den AP 4 an den NM 1 übertragen.
Hierauf wird von der Zugangseinrichtung 4 mit dem ihr bekannten (im Telekommunikationsnetz vorgesehenen) Schlüssel das Geheimnis entschlüsselt und darauf wird im Schritt 16 das immer noch mit dem öffentlichen Schlüssel des Telekommunikationsteilnehmeridentitätsmoduls 2 verschlüsselte Geheimnis an das Telekommunikationsteilnehmeridentitätsmodul 2 übertragen. Im Telekommunikationsteilnehmeridentitätsmodul 2 ist auch der zum genannten öffentlichen Schlüssel zugehörige private Schlüssel gespeichert und wird gewendet um das Geheimnis zu entschlüsseln. Daraufhin kann dieses Geheimnis beispielsweise zur vertraulichen Kommunikation zwischen dem Endgerät 1 und der Zugangseinrichtung 4 verwendet werden.
Die Zugangseinrichtung (4) nimmt den Teilnehmer in eine Liste von Telekommunikationsteilnehmern mit Zugang zum Telekommunikationsnetz (3) und/ oder Dienst (9) auf, und gewährt den Zugang zum Telekommunikationsnetz und/ oder Dienst (9) nur in die Liste aufgenommenen Teilnehmern.

Weiterhin kann ein Telekommunikationsendgerät 1 mit dem Telekommunikationsteilnehmeridentitätsmodul 2 bei einem Dritten (9) beispielsweise (je nach dem was das/die Zertifikat zulässt/zulassen) weitere Dienste und Ressourcen in Anspruch nehmen, Waren bestellen, elektronisch bezahlen etc., wobei der Dritte (9) entweder bei einer Einrichtung NMT 5 des Telekommunikationsnetzes 3 sich den Grad der Berechtigungen bestätigen lässt oder bei der CA 7 (s.o.) nachfragt.

## Patentansprüche

1. Verfahren zur Prüfung der Berechtigung eines Teilnehmers eines Telekommunikationsendgerätes (1) zur Inanspruchnahme eines Dienstes (9) und/ oder Benutzung eines Telekommunikationsnetzes,
wobei eine Zugangseinrichtung (4) eines Telekommunikationsnetzes (3) vom Telekommunikationsendgerät (1) zumindest ein Zertifikat und eine Identitätsangabe erhält (10),
wonach eine Netzwerkmanagementeinrichtung (NMT 5) oder eine Zertifizierungseinrichtung (7) eine Prüfung dahingehend durchführt, ob das Zertifikat die Identitätsangabe bestätigt und einen positiven Status hat, **dadurch gekennzeichnet daß** falls dies der Fall ist, der Zugangseinrichtung (4) ein Geheimnis (session key 15) übersandt wird, das mit zumindest dem öffentlichen Schlüssel des Telekommunikationsteilnehmeridentitätsmoduls (2) verschlüsselt auch an das Telekommunikationsendgerät (1, 2) gesandt (15, 16) wird.

2. Verfahren nach Anspruch 1
**dadurch gekennzeichnet,**
**dass** nach der Übersendung des Geheimnisses die Zugangseinrichtung (4) den Teilnehmer in eine Liste von Telekommunikationsteilnehmern mit Zugang zum Telekommunikationsnetz (3) und/oder Dienst (9) aufnimmt,
wobei die Zugangseinrichtung (4) den Zugang zum Telekommunikationsnetz (3) und/ oder zum Dienst (9) nur in die Liste aufgenommenen Teilnehmern gewährt.

3. Verfahren nach Anspruch 1 oder 2,
**dadurch gekennzeichnet,**
**dass** die Zugangseinrichtung (4) das vom Telekommunikationsendgerät (1) erhaltene Zertifikat, die Identität und eine replay- protection an eine Netzwerkmanagementeinrichtung (5) des Telekommunikationsnetzes (3) sendet, welche von der Zertifizierungseinrichtung (7) die Prüfung durchführen lässt und bei positiver Prüfung das Geheimnis an die Zugangseinrichtung (4) und über die Zugangseinrichtung (4) an das Telekommunikationsendgerät (1) sendet (15,16).

4. Verfahren nach einem der vorhergehenden Ansprüche
**dadurch gekennzeichnet,**
**dass** das Ergebnis der Prüfung der Zertifizierungseinrichtung (7) von der Netzwerkmanagementeinrichtung (5) an eine Dienstverwaltungseinrichtung (6) mitgeteilt wird.

5. Verfahren nach einem der vorhergehenden Ansprüche
**dadurch gekennzeichnet,**
**dass** die Zertifizierungsinstanz (7) in einem anderen Netzwerk angeordnet ist als die Zugangseinrichtung (4).

6. Verfahren nach einem der vorhergehenden Ansprüche 1 bis 4
**dadurch gekennzeichnet,**
**dass** die Zertifizierungseinrichtung (7) im gleichen Telekommunikationsnetz angeordnet ist wie die Zugangseinrichtung (4).

7. Verfahren nach einem der vorhergehenden Ansprüche
**dadurch gekennzeichnet,**
**dass** der private Schlüssel des Schlüsselpaares nur in einem Telekommunikationsteilnehmeridentitätsmodul (2) des Telekommunikationsendgerätes (1) gespeichert ist.

8. Verfahren nach einem der vorhergehenden Ansprüche
**dadurch gekennzeichnet,**
**dass** das Telekommunikationsnetz ein Internet-Protokoll-Netz ist.

9. Verfahren nach einem der vorhergehenden Ansprüche
**dadurch gekennzeichnet,**
**dass** das Telekommunikationsnetz ein zellulares Mobilfunknetz ist.

10. Verfahren nach einem der vorhergehenden Ansprüche
**dadurch gekennzeichnet,**
**dass** für ein Telekommunikationsteilnehmeridentitätsmodul mehrere Zertifikate, insb. Attributzertifikate verwendbar sind, deren positive Prüfung jeweils das Telekommunikationsendgerät für zumindest eine Art von Transaktionen oder sonstigen Diensten oder Berechtigungen zulässt.

11. Verfahren nach einem der vorhergehenden Ansprüche
**dadurch gekennzeichnet,**
**dass** bei positiver Prüfung (7) dem Telekommunikationsendgerät die Benutzung von durch Dritten (9) über das Telekommunikationsnetz (3) angebotenen Transaktionen oder Diensten ermöglicht wird.

12. Verfahren nach einem der vorhergehenden Ansprüche
**dadurch gekennzeichnet,**
**dass** das Telekommunikationsteilnehmeridentitätsmodul (2) einen zum öffentlichen Schlüssel passenden privaten Schlüssel gespeichert hat und zur Entschlüsselung des mit dem öffentlichen Schlüssel verschlüsselten Geheimnisses verwendet.

13. Telekommunikationsnetz, insbesondere zur Durchführung des Verfahrens nach einem der vorhergehenden Ansprüche, mit
- einer Zugangseinrichtung (4) zum Empfang eines von einem Telekommunikationsendgerät (1) übersandten (10) Zertifikates und Identitätsangabe,
- einem Zugang zu einer Zertifizierungseinrichtung (7) mit einem Zertifikatgenerierungsverfahren zum Generieren von Zertifikaten aus öffentlichen Schlüsseln, welche Zertifizierungseinrichtung die Gültigkeit eines Zertifikates sowie zugehörige Statusangaben auf Anfrage mitteilt (13),
wobei der Zugang eines Telekommunikationsendgerätes (1) zu einem für Inhaber (1) eines Zertifikates erlaubten Dienst eines Anbieters (9) durch eine Einrichtung (4;6) des Telekommunikationsnetzes (3) nur insoweit gewährt wird, wie die Prüfung eines Zertifikates / der Zertifikate des Telekommunikationsendgerätes durch die Zertifizierungseinrichtung (7) anhand des öffentlichen Schlüssels erfolgreich war **dadurch gekennzeichnet daß**, falls dies der Fall ist, der Zugangseinrichtung (4) ein Geheimnis (session key 15) übersandt wird, das mit zumindest dem öffentlichen Schlüssel des Telekommunikationsteilnehmeridentitätsmoduls (2) verschlüsselt auch an das Telekommunikationsendgerät (1, 2) gesandt (15, 16) wird.

## Claims

1. Method for checking the entitlement of a subscriber of a telecommunication terminal (1) to utilise a service (9) and/or use a telecommunication network,
whereby an access device (4) of a telecommunication network (3) obtains at least one certificate and identity data (10) from the telecommunication terminal (1),
whereupon a network management device (NMT 5) or a certification device (7) carries out a check to establish whether the certificate confirms the identity data and has a positive status,
**characterised in that**,
if this is the case, a secret (session key 15) is transmitted to the access device (4), said secret encoded with at least the public key also being sent to the telecommunication terminal (1, 2) (15, 16).

2. Method according to claim 1,
**characterised in that**
after the secret has been sent, the access device (4) adds the subscriber to a list of telecommunication subscribers with access to the telecommunication network (3) and/or service (9),
whereby the access device (4) grants access to the telecommunication network (3) and/or to the service (9) only to subscribers included in the list.

3. Method according to claim 1 or 2,
**characterised in that**
the access device (4) sends the certificate obtained from the telecommunication terminal (1), the identity and replay protection to a network management device (5) of the telecommunication network (3), which has the check carried out by the certification device (7) and if the check is positive, sends the secret to the access device (4) and via the access device (4) to the telecommunication terminal (1) (15, 16).

4. Method according to one of the preceding claims,
**characterised in that**
notification of the result of the check by the certification device (7) is given by the network management device (5) to a service management device (6).

5. Method according to one of the preceding Claims,
**characterised in that**
the certification entity (7) is arranged in a different network from the access device (4).

6. Method according to one of the preceding claims 1 to 4,
**characterised in that**
the certification device (7) is arranged in the same telecommunication network as the access device (4).

7. Method according to one of the preceding claims,
**characterised in that**
the private key of the key pair is only stored in a telecommunication subscriber identity module (2) of the telecommunication terminal (1).

8. Method according to one of the preceding claims,
**characterised in that**
the telecommunication network is an internet protocol network.

9. Method according to one of the preceding claims,
**characterised in that**
the telecommunication network is a cellular mobile radio network.

10. Method according to one of the preceding claims,
**characterised in that**
a plurality of certificates, particularly attribute certificates, can be used for a telecommunication subscriber identity module, a positive check of which permits the telecommunication terminal at least one type of transaction or other services or entitlements respectively.

11. Method according to one of the preceding claims,
**characterised in that**
in the case of a positive check (7) the telecommunication terminal is permitted to use transactions or services provided by third parties (9) via the telecommunication network (3).

12. Method according to one of the preceding claims,
**characterised in that**
the telecommunication subscriber identity module (2) has stored a private key belonging to the public key, which it uses to decode the secret encoded with the public key.

13. Telecommunication network, particularly for implementing the method according to one of the preceding claims, with
- an access device (4) for receiving a certificate and identity data sent from telecommunication terminal (1),
- access to a certification device (7) with a certificate generation method for generating certificates from public keys, which certification device gives notification of the validity of a certificate and associated status data on request (13), whereby the access of a telecommunication terminal (1) to a service of a provider (9) permitted for holders (1) of a certificate is only granted by a device (4; 6) of the telecommunication network (3) in so far as the check on a certificate/the certificates of the telecommunication terminal by the certification device (7) using the public key was successful,
**characterised in that**,
if this is the case, a secret (session key 15) is transmitted to the access device (4), said secret encoded with at least the public key also being sent to the telecommunication terminal (1, 2) (15, 16).

## Revendications

1. Procédé pour vérifier l'habilitation d'un abonné d'un terminal de télécommunications (1) à faire appel à un service (9) et/ou à utiliser un réseau de télécommunications,
un équipement d'accès (4) d'un réseau de télécommunications (3) recevant (10), du terminal de télécommunications (1), au moins un certificat et une indication d'identité,
suite à quoi un équipement de gestion de réseau (NMT 5) ou un équipement de certification (7) effectue une vérification visant à établir si le certificat confirme l'indication d'identité et a un statut positif, **caractérisé en ce que**,
si tel est le cas, un secret (session key 15) est transmis à l'équipement d'accès (4), lequel secret est également envoyé (15, 16) au terminal de télécommunications (1, 2) sous forme cryptée avec au moins la clé publique du module d'identité d'abonné des télécommunications (2).

2. Procédé selon la revendication 1,
**caractérisé en ce que**,
après la transmission du secret, l'équipement d'accès (4) admet l'abonné sur une liste d'abonnés des télécommunications avec accès au réseau de télécommunications (3) et/ou au service (9), l'équipement d'accès (4) n'octroyant l'accès au réseau de télécommunications (3) et/ou au service (9) qu'aux abonnés admis sur la liste.

3. Procédé selon la revendication 1 ou 2,
**caractérisé en ce que**
l'équipement d'accès (4) envoie le certificat reçu du terminal de télécommunications (1), l'identité et une «replay protection» à un équipement de gestion de réseau (5) du réseau de télécommunications (3), lequel équipement fait effectuer la vérification par l'équipement de certification (7) et, en cas de vérification positive, envoie (15, 16) le secret à l'équipement d'accès (4) et au terminal de télécommunications (1) par l'intermédiaire de l'équipement d'accès (4).

4. Procédé selon l'une des revendications précédentes,
**caractérisé en ce que**
le résultat de la vérification de l'équipement de certification (7) est communiqué à un équipement d'administration de service (6) par l'équipement de gestion de réseau (5).

5. Procédé selon l'une des revendications précédentes,
**caractérisé en ce que**
l'instance de certification (7) est située dans un réseau différent que l'équipement d'accès (4).

6. Procédé selon l'une des revendications précédentes 1 à 4,
**caractérisé en ce que**
l'équipement de certification (7) est situé dans le même réseau de télécommunications que l'équipement d'accès (4).

7. Procédé selon l'une des revendications précédentes,
**caractérisé en ce que**
la clé privée de la paire de clés n'est mise en mémoire que dans un module d'identité d'abonné des télécommunications (2) du terminal de télécommunications (1).

8. Procédé selon l'une des revendications précédentes,
**caractérisé en ce que**
le réseau de télécommunications est un réseau de protocole Internet.

9. Procédé selon l'une des revendications précédentes,
**caractérisé en ce que**
le réseau de télécommunications est un réseau radio mobile cellulaire.

10. Procédé selon l'une des revendications précédentes,
**caractérisé en ce que**
sont utilisables, pour un module d'identité d'abonné des télécommunications, plusieurs certificats, en particulier certificats d'attributs dont la vérification positive autorise respectivement le terminal de télécommunications pour au moins un type de transactions ou d'autres services ou habilitations.

11. Procédé selon l'une des revendications précédentes,
**caractérisé en ce que**,
en cas de vérification positive (7), le terminal de télécommunications se voit permettre l'utilisation de transactions ou de services offerts par des tiers (9) via le réseau de télécommunications (3).

12. Procédé selon l'une des revendications précédentes,
**caractérisé en ce que**
le module d'identité d'abonné des télécommunications (2) a mis en mémoire une clé privée adaptée à la clé publique et l'utilise pour le décryptage du secret crypté avec la clé publique.

13. Réseau de télécommunications, en particulier pour exécuter le procédé selon l'une des revendications précédentes, comprenant
- un équipement d'accès (4) pour recevoir un certificat et une indication d'identité transmis par un terminal de télécommunications (1),
- un accès à un équipement de certification (7) avec un procédé de génération de certificats pour générer des certificats à partir de clés publiques, lequel équipement de certification communique (13), sur demande, la validité d'un certificat ainsi que des indications de statut associées,
l'accès d'un terminal de télécommunications (1) à un service d'un fournisseur (9) permis pour le titulaire (1) d'un certificat n'étant octroyé par un équipement (4; 6) du réseau de télécommunications (3) que dans la mesure où la vérification d'un certificat / des certificats du terminal de télécommunications par l'équipement de certification (7) à l'aide de la clé publique a réussi, **caractérisé en ce que**, si tel est le cas, un secret (session key 15) est transmis à l'équipement d'accès (4), lequel secret est également envoyé (15, 16) au terminal de télécommunications (1, 2) sous forme cryptée avec au moins la clé publique du module d'identité d'abonné des télécommunications (2).
